# EUROPÄISCHE PATENTSCHRIFT

(11) **EP 3 439 843 B1**
(45) Veröffentlichungstag und Bekanntmachung des Hinweises auf die Patenterteilung: **04.03.2020**
(21) Anmeldenummer: 17721531.6
(22) Anmeldetag: 10.04.2017
(51) Int. Cl.: B29C 33/20, F16G 3/00, F16G 3/10, F16G 3/16

(54) **MOBILE VULKANISIERPRESSE**
MOBILE VULCANIZING PRESS
PRESSE À VULCANISER MOBILE

(30) Priorität: 08.04.2016 DE 102016205942
(43) Veröffentlichungstag der Anmeldung: 13.02.2019
(73) Patentinhaber: VulcTech GmbH, 84032 Altdorf (DE)
(72) Erfinder: KNOTHE, Andreas, 47249 Duisburg (DE)
(74) Vertreter: MERH-IP Matias Erny Reichl Hoffmann Patentanwälte PartG mbB
(86) Internationale Anmeldenummer: PCT/EP2017/058521
(87) Internationale Veröffentlichungsnummer: WO 2017/174818

(56) Entgegenhaltungen:
- DE-B- 1 014 736
- JP-A- H0 334 809

## Beschreibung

Die vorliegende Erfindung betrifft eine mobile Vulkanisierpresse. Diese hat insbesondere den technischen Vorteil, dass sie noch kompakter und einfacher handhabbar ist, so dass die hier vorgestellte mobile Vulkanisierpresse noch besser für mobile Anwendungen geeignet und darauf zugeschnitten ist.

Bekannte Vulkanisierpressen weisen üblicherweise beheizbare Platten (Heizplatten) auf, die oberhalb und unterhalb eines zu vulkanisierenden Produktes angeordnet sind. Das zu vulkanisierende Produkt kann beispielsweise ein Förderband für den Einsatz im Tagebau sein. Die Heizplatten erzeugen die Temperatur zur Durchführung der Vulkanisierung. Bekannte Vulkanisierpressen weisen einen Unter- und einen Oberkasten auf, in denen u.a. die Heizplatten integriert sind. Während des Vulkanisierprozesses werden der Unter- und der Oberkasten mittels einer mechanischen Sicherung miteinander verbunden. Eine solche Sicherung kann bspw. durch das Verbinden der beiden Kästen mittels einer Metallklammer (s. DE 10 2014 112 296 A1) oder mittels (Verbindungs- bzw.) Zugbolzen hergestellt werden. Die DE 10 14 736 B zeigt eine elektrische Sicherheitseinrichtung mit mehreren in einem gemeinsamen Stromkreis in Reihe liegenden Schaltern für Vulkanisierpressen mit durch Klappschrauben zu verriegelnden Formhälften. Das Öffnen der Vulkanisierpresse ist erst möglich, wenn sämtliche Klappschrauben außer Eingriff mit dem Formoberteil sind.

Die Zugbolzen bekannter Vulkanisierpressen sind ggf. verschwenkbar an dem Unterkasten befestigt. Nachteilig ist bei den bekannten Lösungen allerdings, dass die Zugbolzen nur mühsam und unter Einsatz von Werkzeug gänzlich von dem Unterkasten abgenommen werden können; das Abnehmen der Sicherungsbolzen ist beim Aufbau mobiler Vulkanisierpressen jedoch durchaus häufig notwendig ist, um den vorhandenen Installationsraum bestmöglich nutzen zu können. Beispielsweise kann es bei geringem Installations- bzw. Bauraum im Sinne eines möglichst wenig aufwendigen Aufbaus hilfreich sein, die Möglichkeit zu haben, die Zugbolzen erst nach dem Aufbau der übrigen Komponenten mit dem Unterkasten verbinden zu können, damit die Zugbolzen während des Aufbaus nicht zusätzlichen Installationsraum belegen.

Ferner wird der Verschwenkbereich, d.h. der anschwenkbare Winkelbereich, der Zugbolzen bekannter Vulkanisierpressen u.a. über einen Sicherungsstift, der mittels Splinten oder dgl. gesichert wird, eingestellt. Der Sicherungsstift liegt dann wie "eine Schranke" in dem Verschwenkradius des Zugbolzens und gibt damit das Maximum bzw. Minimum des Verschwenkbereiches vor. Wird der Zugbolzen soweit ausgelenkt/verschwenkt, dass er in Kontakt mit dem Sicherungsstift kommt, hält der Sicherungsstift den Zugbolzen in dieser einen Verschwenkposition fest. Der Zugbolzen kann dann nicht weiter verschwenken, was während der Montage nützlich sein kann, da die am Unterkasten montierten Zugbolzen dann nicht zusätzlich gesichert oder in Position gehalten werden müssen. Allerdings ist es ein Nachteil dieser bekannten Sicherung, dass eine Veränderung des Verschwenkbereiches nur mit zusätzlichem Werkzeug und weiterem Montageaufwand möglich ist, da die Splinte, der Sicherungsstift und dgl. bei jeder Änderung gelöst werden müssen; dies ist im täglichen Einsatz jedoch hinderlich, da die Rüstzeiten verlängert werden und der Verschwenkbereiches, der über den seitlich bzw. in Längsrichtung erforderlichen Platzbedarf der mobilen Vulkanisierpresse entscheidet, nicht mit wenig Aufwand und ohne zusätzliches Werkzeug an den vorhandenen Bau- bzw. Installationsraum angepasst werden kann. Die "arretierte" Verschwenkposition, in der der Zugbolzen von dem Sicherungsstift gehalten wird, ist ebenfalls nur mit zusätzlichem Aufwand und Werkzeug veränderbar, da auch dazu die Splinte, der Sicherungsstift und usw. gelöst und neu befestigt werden müssen.

Weiterhin wird bei bekannten Vulkanisierpressen der Oberkasten mit u-förmigen Ausnehmungen in dem Gehäuse des Oberkastens selbst versehen, in die ein Zugbolzen eingeführt werden kann. Muttern oder dgl., die gegen die obere Oberfläche des Oberkastens angezogen werden, sichern den Zugbolzen, wenn er in Eingriff mit der u-förmigen Ausnehmung steht. Nachteilig ist dabei allerdings, dass die Muttern und die Zugbolzen konstruktionsbedingt über die obere Oberfläche des Oberkastens hinausragen, so dass die bekannten Vulkanisierpressen im Hinblick auf einen mobilen Einsatz und den häufig nur geringen vorhandenen Installationsraum immer noch relativ groß bauen. Ferner sei angemerkt, dass die Verwendung von Klammern, z.B. anstatt Zugbolzen, die Abmessungen der Vulkanisierpresse in laterale Richtung vergrößern kann.

Es besteht mithin Bedarf für eine Vulkanisierpresse, die in punkto Handhabbarkeit und benötigtem Installations- bzw. Bauraum noch konsequenter auf mobile Anwendungen zugeschnitten ist, und die damit besonders gut für den mobilen Einsatz geeignet ist.

Die Aufgabe wird von der Erfindung gemäß den unabhängigen Patentansprüchen gelöst. Weitere bevorzugte Weiterentwicklungen der Erfindung sind in den abhängigen Ansprüchen beschrieben.

Erfindungsgemäß kann ein Sicherungsmittel für eine mobile Vulkanisierpresse einen Zugbolzen aufweisen, der an einem seiner beiden axialen Enden ein Außengewinde haben kann und an dessen gegenüberliegenden axialen Ende ein Rastmittel, bevorzugt lösbar, angeordnet sein kann. Ferner kann der Zugbolzen eine Durchgangsbohrung haben, die zwischen den beiden axialen Enden des Zugbolzens angeordnet ist und deren Achse senkrecht zu der des Zugbolzens angeordnet sein kann. Die Position des Rastmittels bzw. eines Rastabschnittes kann relativ zu dem axialen Ende des Zugbolzens elastisch veränderbar sein. Mit anderen Worten kann eine Länge, mit der das Rastmittel bzw. ein Rastabschnitt davon über das axiale Ende des Zugbolzens hinausragt, elastisch veränderbar sein.

Eine erfindungsgemäße mobile Vulkanisierpresse kann einen Unterkasten und einen Oberkasten aufweisen. Die beiden Kästen können bündig übereinander angeordnet werden. Vulkanisiergut kann zwischen den beiden Kästen angeordnet werden. Ferner können zumindest zwei bevorzugt oben beschriebene Sicherungsmittel/Zugbolzen zum lösbaren Verbinden bzw. Arretieren des Oberkastens und des Unterkastens vorgesehen sein, wobei jeweils zumindest eines an einem Ende der mobilen Vulkanisierpresse angeordnet sein kann. Der Unterkasten und/oder der Oberkasten, bevorzugt der Unterkasten, kann zumindest eine erste Bolzenaufnahme aufweisen, an der der Zugbolzen verschwenkbar und besonders bevorzugt lösbar anordenbar ist. Ferner kann zumindest eine Raststelle an dem Unterkasten bzw. dem Oberkasten derart angeordnet sein, dass das Rastmittel des Zugbolzens in zumindest einer vordefinierten Schwenkposition des Zugbolzens in die zumindest eine Raststelle einrasten kann. An dieser Stelle sei darauf hingewiesen, dass die Erfindung nachfolgend vornehmlich so beschrieben wird, dass die erste Bolzenaufnahme am Unterkasten und eine optionale zweite Bolzenaufnahme an dem Oberkasten angeordnet ist. Diese Verteilung ist jedoch nur ein Beispiel und sie kann auch umgekehrt sein oder es können sowohl erste und zweite Bolzenaufnahmen jeweils am Unter- und Oberkasten angeordnet sein.

Technisch vorteilhaft kann der Zugbolzen verschwenkbar an der mobilen Vulkanisierpresse gemäß der Erfindung angeordnet werden, wobei die mobile Vulkanisierpresse vordefinierte bzw. vordefinierbare Rastpositionen anbieten kann. Konkret ermöglicht es die Erfindung, dass das Rastmittel mit einer entsprechenden Raststelle in Rasteingriff gebracht werden kann, indem der Zugbolzen soweit an der mobilen Vulkanisierpresse verschwenkt wird, bis es zu dem oben genannten Rasteingriff kommt. Die elastische Kraft des Rastabschnittes hält den Zugbolzen dann in der Rastposition bzw. der Schwenkposition fest, so dass die Vulkanisierpresse bspw. bewegt werden kann, ohne dass die daran montierten Zugbolzen zusätzlich gesichert oder festgehalten werden müssten. Dies verbessert die Handhabung der mobilen Vulkanisierpresse erheblich, da es ein Grunderfordernis von mobilen Anwendungen ist, dass die Vulkanisierpresse ohne größeren Aufwand und ohne mühsame Handgriffe bewegt werden kann. Ferner können die vorgegebene Rastpositionen auch dazu genutzt werden, Installations- bzw. Bauraum einzusparen, da die Zugbolzen entsprechend des vorhandenen Bauraumes in eine vorbestimmte Schwenkposition rotiert/verschwenkt werden können und dort auch so lange verbleiben bis sie aktiv aus der Rastposition herausgeschwenkt werden. Aufgrund der elastischen Veränderbarkeit der Relativposition des Rastabschnittes kann der Zugbolzen mit einem definierbaren zusätzlichem Kraftaufwand, bspw. durch leichten oder größeren manuellen Druck durch einen Bediener, aus der Rastposition herausgeschwenkt werden, so dass eine freie Schwenkbarkeit wieder hergestellt werden kann. Zusätzliche Werkzeuge oder komplexe Handgriffe sind für diesen Vorgang nicht notwendig.

Das Rastmittel ist bevorzugt ein Raststift oder eine Federschraube. Die Befestigung zwischen dem Rastmittel und dem Zugbolzen ist bevorzugt so ausgestaltet, dass das Rastmittel in eine axial an dem Ende des Zugbolzens eingebrachte axiale Aufnahmebohrung, besonders bevorzugt eine Gewindebohrung, eingeschraubt ist. Die Spannkraft der Federschraube oder eines anderen elastischen Körpers, der den Rastabschnitt hält, kann so gewählt werden, dass der Zugbolzen sicher in dem Rasteingriff mit der Raststelle gehalten wird und gleichzeitig eine zusätzliche (zusätzlich zur Gewichtskraft des Zugbolzens) vordefinierte Kraft den Zugbolzen wieder aus der Einrastposition herausbewegt.

Besonders bevorzugt kann das Rastmittel mit einer Kontermutter befestigt sein bzw. eine solche aufweisen, mit der die Länge, die das Rastmittel bzw. ein Teilabschnitt/Rastabschnitt des Rastmittels über das axiale Ende des Zugbolzens hinausragt, einstellbar sein kann. Andere Möglichkeiten zur Einstellung der Länge, mit der das Rastmittel bzw. der Teilabschnitt des Rastmittels über das axiale Ende des Zugbolzens herausragt, sind selbstverständlich auch heranziehbar; bspw. Unterlegscheiben oder dgl.

Bevorzugt ragt ein Teilabschnitt/Rastabschnitt des Rastmittels im Grundzustand über das Ende des Zugbolzens hinaus. Wird dann Druck oder dgl. auf das Rastmittel ausgeübt, kann dieses gegen einen elastischen Widerstand eingedrückt werden. Beim Entfernen des Druckes oder dgl. kehrt das Rastmittel bzw. der Rastabschnitt/Teilabschnitt des Rastmittels elastisch wieder in den Grundzustand zurück. Zum Eindrücken des Rastmittels bzw. des Teilabschnittes des Rastmittels ist das Überschreiten eines vorbestimmten Druckes notwendig, der bevorzugt so gewählt bzw. eingestellt ist, bspw. über die Federstärke oder dgl., dass das Rastmittel, wenn es in einer Raststelle eingerastet ist, zumindest das Gewicht des Zugbolzens halten kann. D.h. die Rastverbindung zwischen dem Rastmittel und einer Raststelle wird bevorzugt nicht von dem Gewicht des Zugbolzens alleine wieder gelöst. Dies hat den Vorteil, dass die Rastverbindung den Zugbolzen in einer Schwenkposition halten kann und die Rastverbindung durch zusätzliche (voreinstellbare) Krafteinwirkung auf den Zugbolzen lösbar ist.

An dem Außengewinde des Zugbolzens wird bevorzugt eine Mutter per Schraubverbindung befestigt, die das Ende des Zugbolzens, an dem die Mutter vorgesehen ist, mittels kraftschlüssiger und/oder formschlüssiger Verbindung an einer mobilen Vulkanisierpresse festhalten kann. Bevorzugt kann die Unterseite der Mutter eine kreisbogenförmig geformte Schnittfläche in dem Abschnitt des Mutterkörpers aufweisen, in dem auch ein Sackloch zur Aufnahme des Außengewindes des Zugbolzens angeordnet ist. Die kreisbogenförmig geformte Fläche der Mutter dient bevorzugt dazu, Torsions- und Biegeauslenkungen eines Unter- bzw. Oberkastens einer mobilen Vulkanisierpresse während des Vulkanisationsprozesses auszugleichen.

Ferner kann die Aufnahmebohrung des Rastmittels bevorzugt in einem verjüngten Endabschnitt des Bolzens als Sackloch mit Innengewinde ausgeführt sein. Die Durchgangsbohrung des Zugbolzens kann bevorzugt in einem bauchigen Abschnitt des Bolzens angeordnet sein, der sich besonders bevorzugt (direkt) an den verjüngten Abschnitt anschließen kann. Die Durchgangsbohrung kann bevorzugt zur Ausbildung einer Welle-Nabe-Verbindung mit entsprechenden Bauteilen am Pressenkörper/Unter- bzw. Oberkasten vorgesehen sein. Die Formgebung des Zugbolzens mit verjüngten und bauchigen Abschnitten erlaubt es, einen optimalen Kompromiss zwischen Gewichtsreduktion und mechanischer Festigkeit zu erreichen.

Eine erste und eine zweite Bolzenaufnahme, die bevorzugt auf den Unter- und Oberkasten verteilt sind, können unterschiedlich gestaltet sein, um eine optimale Arretierung der beiden Kästen mittels des Sicherungsmittels zu ermöglichen. So dient die erste Bolzenaufnahme bevorzugt zum Ermöglichen einer lösbaren und verschwenkbaren Lagerung des Sicherungsmittels, während die zweite Bolzenaufnahme bevorzugt das Einstellen der Klemmkraft zwischen den beiden Kästen erlaubt, indem eine Mutter gegen ein Tellerelement der zweiten Bolzenaufnahme verschraubt wird (wodurch der Abstand zwischen dem Punkt, an dem die erste Bolzenaufnahme das Sicherungsmittels hält, und dem Punkt, an dem die zweite Bolzenaufnahme das Sicherungsmittel hält). Ferner kann durch eine entsprechende Formgebung des Tellerelementes und einer Unterseite der Mutter zusätzlich bevorzugt erreicht werden, dass Biege- und Torsionsbewegungen der Vulkanisierpresse ausgleichbar sind.

Es ist somit möglich, dass die mobile Vulkanisierpresse mit möglichst wenig zusätzlichem Werkzeug einfach handhabbar ist; z.B. kann das Sicherungsmittel bzw. der Zugbolzen ohne Hilfsmittel von der Vulkanisierpresse entfernt oder daran befestigt werden und das Sicherungsmittel bzw. der Zugbolzen kann ohne weitere Handgriffe/Werkzeug in verschiedene selbsthaltende Schwenkpositionen verschwenkt werden und daraus wieder gelöst werden, um die Handhabung und den Platzbedarf der Vulkanisierpresse zu optimieren. Diese Punkte erhöhen die Handhabbarkeit der mobilen Vulkanisierpresse und verringern den Platzbedarf sowohl während des Aufbaus als auch im Betrieb, so dass die Vulkanisierpresse noch besser auf die Herausforderungen mobiler Anwendungen zugeschnitten ist.

Ferner kann die mobile Vulkanisierpresse zumindest eine erste Bolzenaufnahme an dem Unterkasten (und/oder dem Oberkasten, bevorzugt dem Unterkasten,) zumindest zwei zueinander beabstandet angeordnete erste Halteelemente umfassen, die fluchtend angeordnete Öffnungen aufweisen können und zwischen denen die Durchgangsbohrung des Zugbolzens fluchtend mit den Öffnungen der Halteelemente anordenbar sein kann, um diesen mit einer Steckwelle an dem Unter- bzw. dem Oberkasten verschwenkbar zu befestigen. Die zumindest eine Raststelle oder eine Rastleiste kann zwischen den Halteelementen angeordnet sein. Diese Anordnung der Halteelemente und der Raststelle bzw. Rastleiste ermöglicht eine sehr kompakte Bauform der mobilen Vulkanisierpresse, da der vorhandene Bauraum optimal genutzt wird.

Ferner kann die mobile Vulkanisierpresse mehrere Raststellen haben, die mehrere Schwenkpositionen des Zugbolzens vorgeben, wobei die Raststellen als Einkerbungen an einer Rastleiste ausgebildet sein können. Die Rastleiste ist eine bevorzugte Möglichkeit, Raststellen anzubieten. Es kann aber auch eine Zahnstangen vorgesehen sein oder Einkerbungen, die direkt an dem Gehäuse des Kastens vorgesehen sind. Die Raststellen sind bevorzugt oberhalb und unterhalb zueinander entlang der Vertikalen angeordnet. Die Rastleiste ermöglicht auf konstruktiv wenig komplexe Weise die Bereitstellung von mehreren Rastpositionen an vordefinierten Positionen bei möglichst kompakter Bauform.

Ferner kann die mobile Vulkanisierpresse, bevorzugt jeweils an dem Ober- und der Unterkasten, eine Heizplatte (nachfolgend auch als Druckplatte bezeichnet) haben, die besonders bevorzugt mittels integrierter Heizelemente beheizbar sein kann. Der Ober- und der Unterkasten kann jeweils eine rechteckige Grundfläche haben und die Heizplatte jeweils eine parallelogrammförmige Grundfläche. Die Längskanten der Heizplatte und des Ober- bzw. Unterkastens können bündig übereinander angeordnet sein. Die kürzeren (Seiten-)kanten/Querkanten/Querseiten des Ober- bzw. Unterkastens können über die Seitenkanten der Heizplatte hinausstehen. Die zumindest eine erste Bolzenaufnahme des Unter- bzw. Oberkastens kann in dem Abschnitt des Unter- bzw. Oberkastens angeordnet sein, der über die Seitenkante der Heizplatte hinaussteht. Die oben genannte bündige Anordnung der Längskanten erlaubt es, dass an den Längskanten keine weiteren Bauteile der Vulkanisierpresse überstehen, so dass die Bauform noch kompakter wird und überstehenden Bauteile nicht verhindern, dass mehrere Vulkanisierpressen an den Längskanten nebeneinander aufgestellt werden können, falls dies bei großen Vulkanisierstücken notwendig sein sollte. Die Formgebung der Kästen und der Heizplatten erlaubt es zudem, dass jeweils an den Querseiten der Kästen ein Bereich/Abschnitt bereitgestellt wird, der für den Einbau/Integration der Sicherungsmittel/Zugbolzen und den dafür benötigen Aufnahmeelementen vorgesehen werden kann. Diese Bauteile finden somit ebenfalls im Bereich der rechteckigen Grundfläche der Kästen Platz, d.h. sie stehen nicht darüber hinaus, was die mobile Vulkanisierpresse noch kompakter macht und damit noch besser geeignet für mobile Anwendungen.

Ferner können erste Halteelemente als Metallbleche ausgebildet sein, die bevorzugt am Unterkasten angeordnet sein können. Am Oberkasten kann zumindest eine zweite Bolzenaufnahme angeordnet sein, die ein Tellerelement mit U-förmiger Ausnehmung umfasst. Ferner kann das Tellerelement mit U-förmiger Ausnehmung derart an dem Oberkasten angeordnet sein, dass bei einem Verschwenken des mit dem Unterkasten verbundenen Zugbolzens dieser in Eingriff mit der U-förmigen Ausnehmung bringbar ist, und wobei das Tellerelement eine kugelförmig eingesenkte Oberfläche aufweist.

Die Formgebung des Tellerelementes und der U-förmigen Ausnehmung erlauben es, dass die Mutter des Sicherungselementes dort mit einer Flächenpressung kraftschlüssig und/oder formschlüssig verbunden werden kann, so dass das entsprechende Ende des Sicherungselementes bzw. des Bolzens sicher von dem zweiten Halterelement gehalten werden kann. Das Befestigen des Sicherungselementes an den Kästen der mobilen Vulkanisierpresse wird dadurch ohne weitere Hilfsmittel/Werkzeuge ermöglicht und dadurch besonders einfach handhabbar.

Ferner kann der Zugbolzen in der ersten Bolzenaufnahme mittels einer Steckwelle sicherbar sein. Die Steckwelle kann an einem Axialende ein Flügelblech und die erste Bolzenaufnahme eine Flügelaufnahme haben. Ein Abschnitt des Flügelbleches der Steckwelle kann nach dem Einstecken der Steckwelle in die Öffnungen der Halteelemente der ersten Bolzenaufnahme mittels Rotation in Eingriff mit der Flügelaufnahme bringbar sein. Ferner kann das Flügelblech eine von der Flügelaufnahme abweichende Farbe haben.

Die Sicherung mittels der Steckwelle erlaubt ein einfaches Abnehmen und Befestigen des Zugbolzens von dem Kasten, so dass, bspw. bei wenig Installationsraum, das Sicherungsmittel erst nach dem Aufbau der restlichen Vulkanisierpresse montiert werden kann. Ferner ist die Montage der mobilen Vulkanisierpresse ebenso wie die Sicherung der Sicherungsmittel und die Arretierung der Kästen ohne Hilfsmittel möglich. Die Sicherung der Steckwelle kann aufgrund der Farbgebung ferner sehr einfach visuell überprüft werden.

Ferner kann die mobile Vulkanisierpresse zumindest zwei Sicherungsmittel gemäß dem Vorbeschriebenen aufweisen, um den Oberkasten und den Unterkasten im übereinander angeordneten Zustand miteinander verriegeln zu können. Ferner kann die Länge der Sicherungsmittel kleiner oder gleich dem Abstand zwischen einer Oberseite des Oberkastens und einer Unterseite des Unterkastens sein, so dass auch in der Höhe keine Bauteile oder Abschnitte von Bauteilen über den Kasten hinausstehen.

Zusammenfassend ermöglicht die Erfindung somit, dass eine mobile Vulkanisierpresse angeboten werden kann, die einfacher handhabbar ist und kompakter ist, so dass sie besonders für mobile Anwendungen, bei denen häufig ein Auf-, Um- oder Abbau stattfindet und zudem häufig wenig Installationsraum vorhanden ist, geeignet ist.

Die Erfindung wird im Folgenden exemplarisch mit Bezug auf die beigefügten, schematischen Zeichnungen beschrieben. Es zeigen
Fig. 1a eine mobile Vulkanisierpresse mit eingelegtem Vulkanisiergut in der Draufsicht,
Fig. 1b eine mobile Vulkanisierpresse mit eingelegtem Vulkanisiergut in perspektivischer Darstellung,
Fig. 2a eine Seitenansicht einer Längsseite einer mobilen Vulkanisierpresse,
Fig. 2b eine Seitenansicht einer Querseite einer mobilen Vulkanisierpresse mit eingelegtem Vulkanisiergut,
Fig. 2c einen vergrößerten Teilabschnitt der Fig. 1a,
Fig. 3a Draufsicht auf einen Unterkasten einer mobilen Vulkanisierpresse,
Fig. 3b eine perspektivische Ansicht eines Unterkastens einer mobilen Vulkanisierpresse,
Fig. 4a eine Seitenansicht einer Querseite eines Unterkastens einer mobilen Vulkanisierpresse,
Fig. 4b eine Detailansicht einer Rastleiste einer mobilen Vulkanisierpresse,
Fig. 4c ein vergrößerter Ausschnitt der Stelle A der Seitenansicht gemäß der Figur 4a,
Fig. 5a eine perspektivische Ansicht einer Steckwelle einer mobilen Vulkanisierpresse,
Fig. 5b eine perspektivische Ansicht eines Tellerelementes einer Bolzenaufnahme einer mobilen Vulkanisierpresse,
Fig. 5c eine Schnittansicht eines Tellerelementes einer Bolzenaufnahme einer mobilen Vulkanisierpresse,
Fig. 6a eine Schnittansicht eines Sicherungsmittels für eine mobile Vulkanisierpresse,
Fig. 6b eine perspektivische Ansicht eines Sicherungsmittels für eine mobile Vulkanisierpresse,
Fig. 6c eine Vergrößerung des Schnittes A-A gemäß der Figur 6a und
Fig. 6d ein vergrößerter Ausschnitt der Stelle C der Schnittansicht gemäß der Figur 6a.

Im Folgenden werden verschiedene Beispiele der vorliegenden Erfindung detailliert unter Bezugnahme auf die Figuren beschrieben. Gleiche bzw. ähnliche Elemente in den Figuren werden hierbei mit gleichen Bezugszeichen bezeichnet. Die vorliegende Erfindung ist jedoch nicht auf die beschriebenen Beispiele begrenzt, sondern umfasst weiterhin Modifikationen von Merkmalen der beschriebenen Beispiele und Kombination von Merkmalen verschiedener Beispiele im Rahmen des Schutzumfangs der unabhängigen Ansprüche.

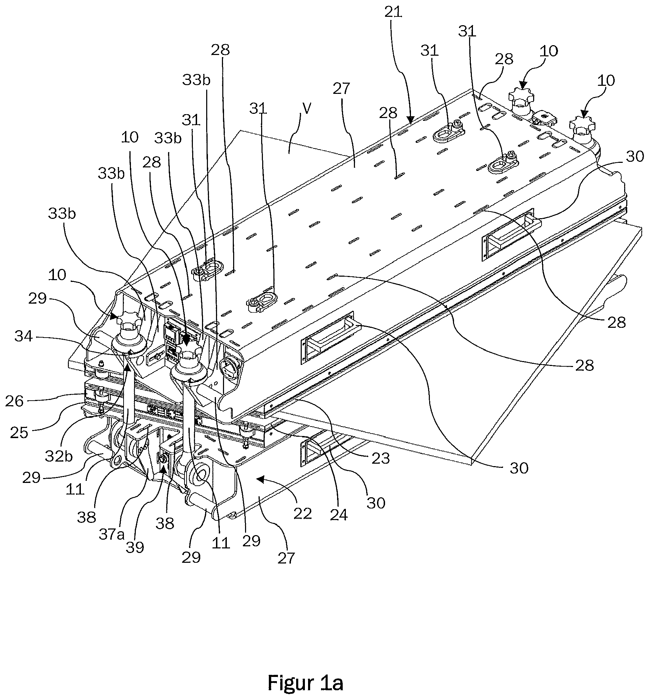

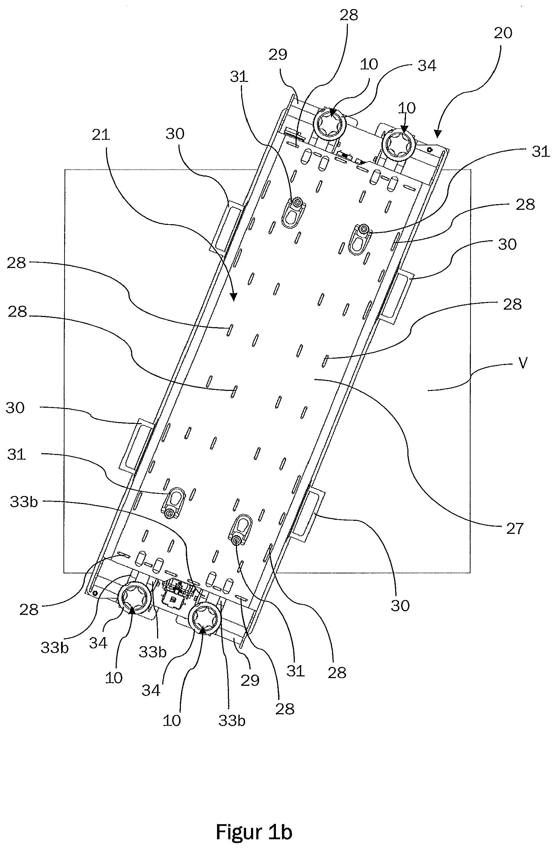

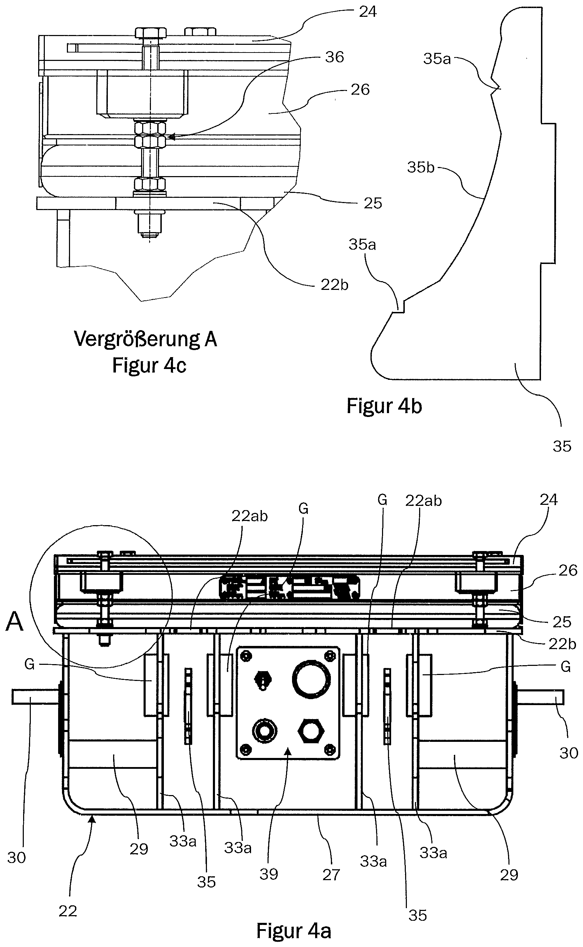

Figuren 1a und 1b zeigen eine perspektivische Darstellung und eine Draufsicht einer mobilen Vulkanisierpresse 20 mit einem Oberkasten 21 und einem Unterkasten 22. Der Ober- und der Unterkasten (Kästen) 21, 22 weist jeweils eine Heizplatte 23, 24 auf, die, wenn die mobile Vulkanisierpresse 20 montiert ist, in Kontakt mit dem Vulkanisiergut V steht. Diese Heiz- bzw. Druckplatten 23, 24 sind bevorzugt metallisch und können besonders bevorzugt mittels nicht gezeigten Heizelementen oder anderen Heizbauteilen, die in den beiden Kästen 21, 22 verbaut sein können, aufgeheizt (auf Vulkanisierungstemperatur) werden. Zudem kann zumindest ein Druckkissen 25 in zumindest einem der beiden Kästen 21, 22 oder auch in beiden angeordnet sein, das bspw. mit Luft befüllt werden kann, um den Druck auf das Vulkanisiergut V absenken oder erhöhen zu können. Beispielsweise kann die Befüllung des Druckkissens 25 per Druckluft oder Wasser-Glykol-Gemisch erfolgen. Die Figur 4a zeigt beispielhaft ein solches Druckkissen 25, das in dem Unterkasten 22 verbaut ist. Weiterhin kann, ebenfalls optional, zwischen der Heizplatte 23, 24 und dem Druckkissen 25 oder zwischen der Heizplatte 23, 24 und weiteren Komponenten, die in den Kästen 21, 22 verbaut sein können, eine Isolierschicht 26 vorgesehen sein, die beispielsweise aus Holz und bevorzugt aus mehreren Holzlagen bzw. Laminat gefertigt sein kann. Diese Isolierschicht 26 ist besonders vorteilhaft für die thermische Isolierung des Druckkissens 25 und für die thermische Isolierung der übrigen Komponenten des Kastens 21, 22 vorgesehen.

Besonders bevorzugt weist sowohl der Ober- als auch der Unterkasten 21, 22 eine im Querschnitt bevorzugt U-förmige Blechabdeckung 27 auf, die mittels Schweißverbindung(en) mit nicht in den Figuren gezeigten mechanischen Versteifungen und Rahmenteilen des entsprechenden Kastens 21, 22 verbunden ist. Anhand der Schweißpunkte bzw. -stellen 28 (dies sind die dunklen langlochförmige Elemente, u.a. auf der Oberseite des Oberkastens 21 erkennbar) in den Figuren 1a und 1b lässt sich erkennen, dass bspw. zumindest zwei Längsträger als Rahmenteile längs durch den Oberkasten 21 (und analog auch durch den Unterkasten 22) verlaufen können.

Die Figuren 1a und 1b zeigen weitere optionale Bauteile, wie die an den beiden Querkanten der Kästen 21, 22 befestigten Griffe 29, die zwischen zwei Blechstegen des jeweiligen Kastens 21, 22 als Rundholme vorgesehen sind. Ferner zeigen beide Figuren auch an den Längsseiten montierte Klappgriffe 30, die selbsttätig (bspw. aufgrund eines Federmechanismus') einklappen, wenn sie nicht bedient werden, wobei die Figuren beispielhaft den ausgeklappten Zustand darstellen. Die Klappgriffe 30 sind in die Seitenwände der Kästen 21, 22 eingelassen, so dass die Klappgriffe 30 im eingeklappten Zustand vollständig in der Seitenwand verschwinden und bündig mit der Längskante des Kastens 21, 22 abschließen. Dies hat den technischen Vorteil, dass im montierten Zustand der mobilen Vulkanisierpresse 20, in dem die Klappgriffe 30 eingeklappt sind, keine Bauteile über die Längskante der beiden Kästen 21, 22 hinausstehen, so dass auch mehrere der mobilen Vulkanisierpressen 20 an den Längsseiten nebeneinander angeordnet werden können; bspw. wenn größeres Vulkanisiergut V verarbeitet werden soll.

Weiterhin können zumindest an der Oberseite des Oberkastens 21 optionale Trageösen 31 angeordnet sein, die besonders bevorzugt in den Oberkasten 21 eingeschraubt sind, so dass die Trageösen 31 jederzeit abgenommen werden können. Die Trageösen 31 können zum Anheben des Oberkastens 21 oder der gesamten mobilen Vulkanisierpresse 20 mittels eines Krans bzw. eines Kranhakens verwendet werden. Im Einsatz können die Trageösen 31 dann demontiert werden, um die Bauhöhe der mobilen Vulkanisierpresse zu verringern, insbesondere dadurch, dass dann kein Bauteil über die obere bzw. untere Oberfläche des Ober- und Unterkastens 21, 22 hinausragt.

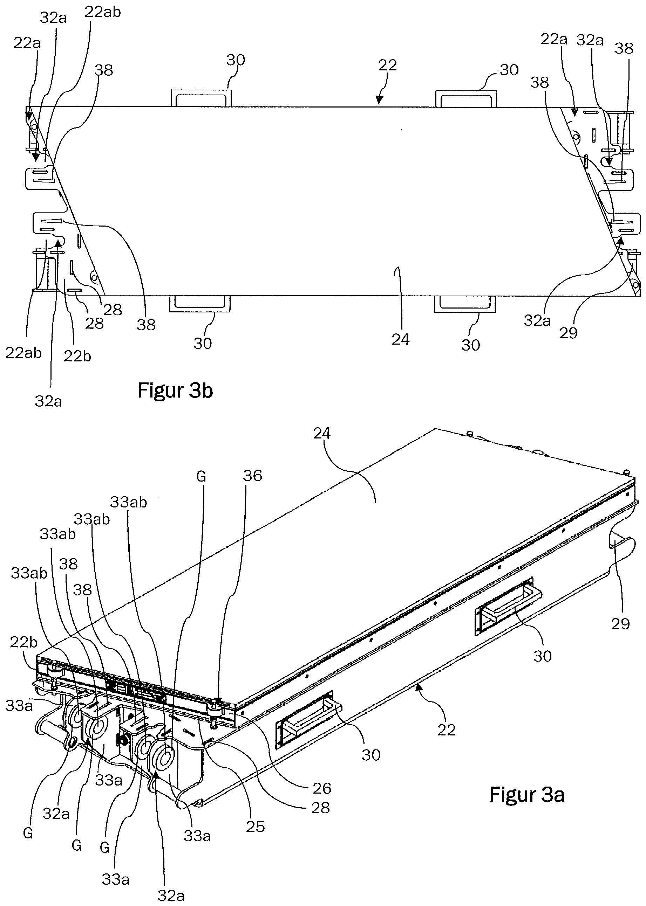

Darüber hinaus zeigen die Figuren 1a und 1b, sowie besonders gut auch die Figur 3b, dass die beiden Kästen 21, 22 jeweils eine rechteckigen Grundfläche aufweisen und die Druckplatten 23, 24 jeweils parallelogrammförmig sind und mittig innerhalb dieser rechteckigen Grundfläche angeordnet sind (u.a. in Fig. 3b dargestellt). Weiterhin ist ersichtlich, dass die Blechabdeckung 27 jeweils nicht über die gesamte Länge der rechteckigen Kastengrundfläche hinweg vorhanden/erstreckt ist, so dass die jeweiligen Längsrichtungs-Endabschnitte (Seitenkanten bzw. Querkanten) der beiden Kästen 21, 22 offen liegen bzw. nicht von der Blechabdeckung 27 überdeckt sind. In dem offenen Endabschnitt des Ober- und des Unterkastens 21, 22 sind u.a. sowohl die optionalen Griffe 29 als auch Bolzenaufnahmen 32a, 32b, die noch im Detail erläutert werden, angeordnet.

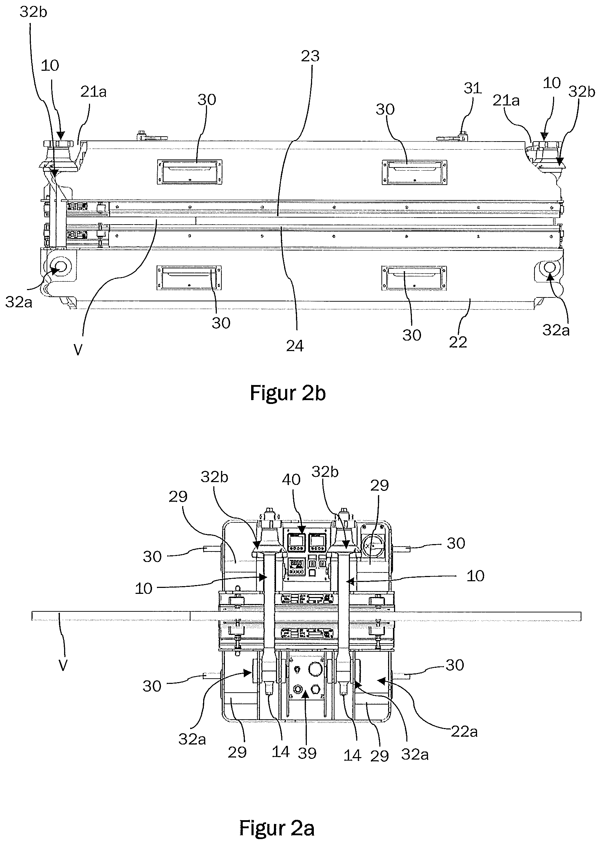

Die Figuren 2a und 2b zeigen die sowohl erste als auch zweite Bolzenaufnahmen 32a bzw. 32b. Besonders deutlich sind erste Bolzenaufnahmen 32a, die in dem gezeigten Beispiel am Unterkasten 22 montiert sind, in den Figuren 3a und 3b zu erkennen. Die Figuren 2a und 2b, wie auch die Figur 1a zeigen einen montierten Zustand der mobilen Vulkanisierpresse 20, in dem die beiden Kästen 21, 22 fluchtend übereinander angeordnet sind, Vulkanisiergut V zwischen den Heizplatten 23, 24 eingelegt ist und die beiden Kästen 21, 22 mittels vier (weniger oder mehr sind auch möglich) Sicherungsmitteln 10, die in die Bolzenaufnahmen 32a, 32b eingesetzt sind, in der Position zueinander arretiert bzw. festgehalten werden.

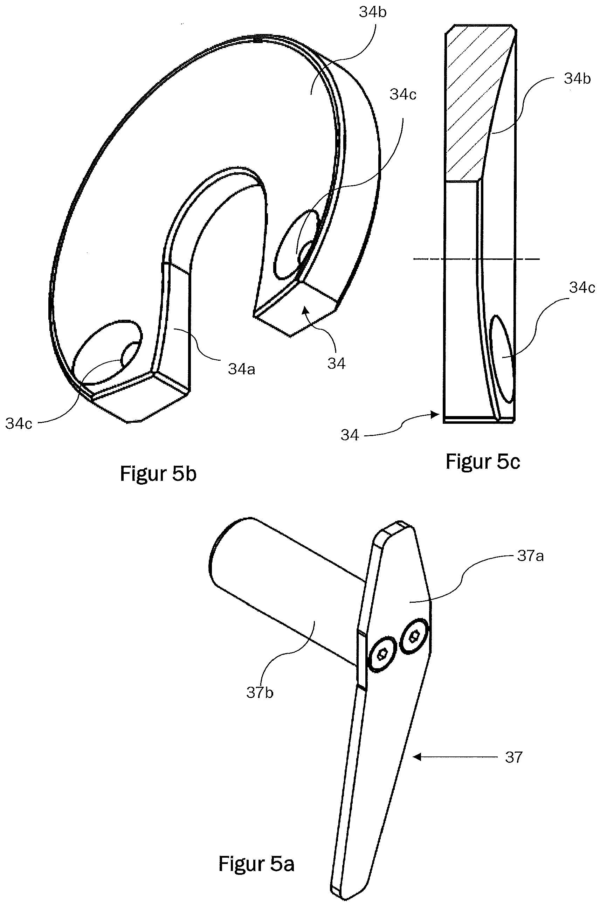

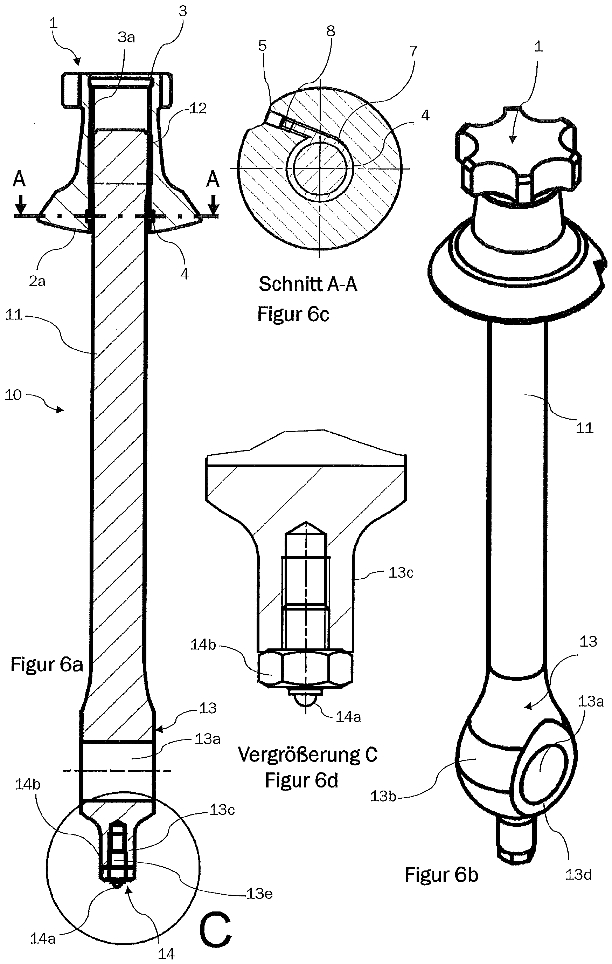

Die Figur 1a zeigt, dass jeweils zwei zweite Bolzenaufnahmen 32b am Oberkasten 21 im Bereich des nicht von der Blechabdeckung 27 überdeckten Abschnittes 22a des Oberkastens 21 vorgesehen sind, die jeweils zwei parallel zueinander angeordnete zweite Halteelemente 33b umfassen, die jeweils ein in den Figuren 5b und 5c gezeigtes Tellerelement 34 halten. Im arretierten Zustand der mobilen Vulkanisierpresse 20 sind die Zugbolzen 11 so verschwenkt, dass diese jeweils in Eingriff mit einer U-förmigen Ausnehmung 34a des Tellerelementes 34 der zugeordneten zweiten Bolzenaufnahme 32b stehen. Die Mutter 1 des Sicherungsmittels 10 ist ferner mit dem Außengewinde 12 des Bolzens 11 verschraubt; und zwar so, dass eine untere Oberfläche 2a der Mutter 1 (Figur 6) auf der Oberfläche einer teilkugelförmigen Senke 34b des Tellerelementes 34 aufliegt. Die Tellerelemente 34 sind über Bohrlöcher 34c und Schrauben mit den zweiten Halteelementen 33b verbunden. Hierbei ist anzumerken, dass die zweiten Halteelemente 33b bevorzugt im Wesentlichen L-förmig sind, so dass der kürzere der beiden Schenkel des gedachten L's das Tellerelement 34 tragen kann. Der längere Schenkel des gedachten L's ist mit einer Seitenwand des Oberkastens 21 verbunden.

Die Figur 2a zeigt zudem das optionale Merkmal der mobilen Vulkanisierpresse 20, dass in einen der beiden Kästen 21, 22 einen Schaltschrank 40 integriert sein kann, der mittels eines eigenen Gehäuses (nicht gezeigt) innerhalb des Kastens 21, 22 angeordnet sein kann. Das Gehäuse dichtet den Schaltschrank 40 und die darin verbauten elektrischen Komponenten gegen Feuchtigkeitseindringen ab. Der Schaltschrank kann insbesondere solche elektrische Komponenten wie Heizregler für beide Kästen 21, 22 aufweisen sowie ein oder mehrere Displays und Schaltelemente, mit denen der Betrieb der mobilen Vulkanisierpresse 20 eingestellt und gesteuert werden kann. Ferner kann bevorzugt am Oberkasten 22 ein Stromunterbrecher 41, z.B. in Form eines Drehschalters, vorgesehen sein. Ferner kann einer der Kästen 21, 22 einen Medienanschluss 39 für Druckluft- und/oder Hydraulikflüssigkeit und dgl. aufweisen, der ebenfalls vollständig in den Kasten 21, 22 integriert sein kann. Die Integration dieser Steuer- und Betriebsmittel in die Kästen 21, 22 macht die mobile Vulkanisierpresse 20 noch kompakter, da keine externen Steuerkästen oder dgl. notwendig sind.

Die Figuren 3a und 3b zeigen beispielhaft den Aufbau des Unterkastens 22. Grundsätzlich sei hier klargestellt, dass im Hinblick auf die in dieser Beschreibung dargelegten Bauteile und Funktionen des Ober- und des Unterkastens auch umgekehrt werden können, so dass beispielsweise die ersten Bolzenaufnahmen 32a am Oberkasten 21 montiert sind und die Zugbolzen 11 am Oberkasten verschwenkbar gehalten werden. Die Erläuterungen hier dienen damit insbesondere der Darstellung des technischen Grundprinzips und dazu wird eine in den Figuren gezeigten Verteilung der Komponenten und Funktionen zwischen dem Oberkasten 21 und dem Unterkasten 22 angenommen.

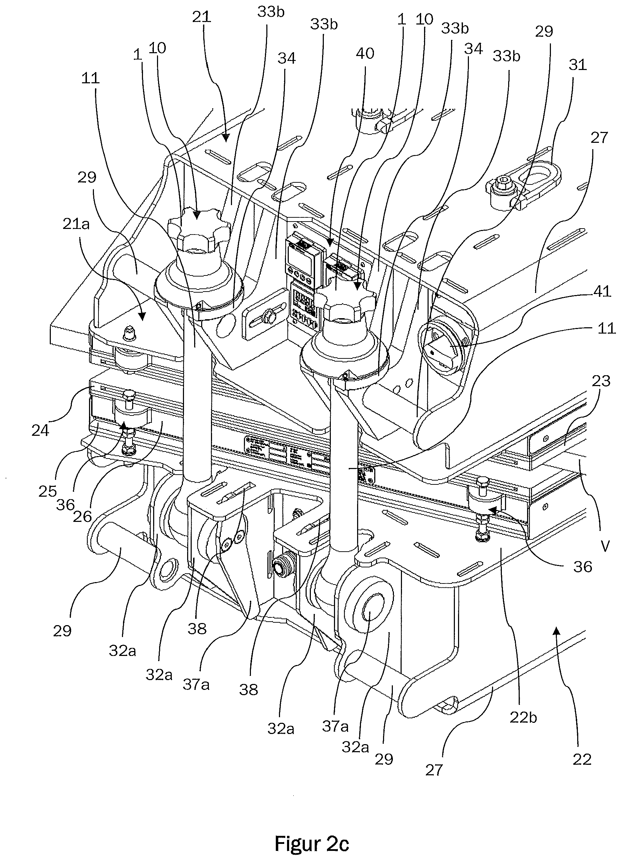

Das Augenmerk soll bei den beiden Figuren 3a und 3b insbesondere auf den nicht von dem Abdeckblech 27 überdeckten Abschnitt 22a liegen, der neben den optionalen Griffen 29 insbesondere (bevorzugt zwei) erste Bolzenaufnahmen 32a aufweist. Diese weisen zumindest zwei erste Halteelemente 33a auf, die bevorzugt Flachbleche sind und parallel und beabstandet zueinander angeordnet sind. Die ersten Halteelemente 33a haben jeweils eine Öffnung/Bohrung 33ab, wobei die Öffnungen 33ab der beiden beabstandet zueinander angeordneten Halteelemente 33a der ersten Bolzenaufnahme 32a fluchtend zueinander angeordnet sind, so dass eine Steckwelle 37 aufgenommen werden kann. Die Öffnungen 33ab sind bevorzugt rund, so dass eine runde Steckwelle 37 eingesteckt werden kann, die eine runde Durchgangsbohrung 13a eines Zugbolzens 11 aufnehmen kann, um den Zugbolzen 11 verschwenkbar zu lagern (s. auch Fig. 2c). Optional können auch Gleitbuchsen G in den Öffnungen 33ab eingesetzt sein. Eine bevorzugt metallische Zwischenplatte 22b des Unterkastens ist in Höhenrichtung zwischen den ersten Halteelementen 32a und der Druckplatte 24 angeordnet. Diese Zwischenplatte 22b kann zwischen den beiden ersten Halteelementen 32a ausgeschnitten (ausgeschnittener Bereich 22ab) sein, um den Verschwenkbereich eines zwischen den ersten Halteelementen 32a montierten Zugbolzens 11 (s. Figur 1a) nicht (zu stark) einzuschränken.

Figur 4a zeigt eine vergrößerte Querseitenansicht des Unterkastens 22, der die vorbeschriebenen ersten Halteelemente 33a genauso wie die Gleitbuchsen G und die Anordnung der ersten Halteelemente 33a einer ersten Bolzenaufnahme 32a zueinander zeigt. Weiterhin wird aus der Figur 4a ersichtlich, dass zwischen den beiden ersten Halteelementen 33a eine Rastleiste 35 angeordnet ist, die in Figur 4b in einer Seitenansicht dargestellt ist. Die Rastleiste 35 weist im vorliegenden Beispiel zwei Raststellen 35a auf, in die ein noch zu beschreibendes Rastmittel 14 bzw. ein Rastabschnitt 14a des Rastmittels 14 einrasten kann, wenn der von der ersten Bolzenaufnahme 32a verschwenkbar gehaltene Zugbolzen 11 verschwenkt wird. Der Abstand zwischen dem axialen Ende des Zugbolzens 11 inklusive dem Rastmittel 14 und den Raststellen 35a ist dabei derart bemessen, dass die Rastmittel 14 auch tatsächlich einrasten können. Eine Nachjustierung der Länge des Zugbolzens 11 inkl. Rastmittel 14 ist beispielsweise über eine im Zusammenhang mit Figur 6 beschriebenen Möglichkeit, z.B. einer Kontermutter, optional vorhanden.

Bevorzugt weist die Rastleiste 35 zudem eine bogenförmige Aussparung 35b zwischen den Raststellen 35a auf, so dass in dem Bereich der bogenförmigen Aussparung 35b kein Kontakt zwischen dem Rastmittel 14 und der Rastleiste 35a beim Verschwenken des Zugbolzens 11 zustande kommt. Ferner ist anzumerken, dass die Anzahl der Raststellen 35a auch eins oder mehr als zwei sein kann. Dies ist insbesondere davon abhängig, wie viele vordefinierte Schwenkpositionen des Zugbolzens 11 bereitgestellt werden sollen. So wird bei dem vorliegenden Beispiel der Rastleiste 35 gemäß der Figur 4b eine horizontale Schwenkposition des Zugbolzens 11 und eine mittlere Schwenkposition (zwischen der Horizontalen und der Vertikalen) bereitgestellt. In diesen beiden Schwenkpositionen kann das Sicherungsmittel 10 bzw. der Zugbolzen 11 aufgrund der Rastkraft zwischen dem Rastmittel 14 und der Raststelle 35a in der Schwenkposition gehalten werden.

Vorteilhaft ist es an dem Anbieten von vordefinierten arretierten Schwenkpositionen, dass die Zugbolzen 11/Sicherungsmittel 10 beim Montieren der mobilen Vulkanisierpresse 20 nicht zusätzlich gehalten werden müssen, was den Aufbau erleichtert. Ferner können verschiedene arretierbare Schwenkpositionen ohne zusätzliche Bauteile oder Handgriffe eingestellt werden. Dies ist vorteilhaft, wenn beispielsweise der verfügbare Platz an der Einsatzstelle der mobilen Vulkanisierpresse limitiert ist, da dann beispielsweise eine mittlere Schwenkposition (eine angewinkelte Position zwischen der Horizontalen und der Vertikalen) gewählt werden kann und damit die Länge, die die Sicherungsmittel 10 über die Seiten des Unterkastens 22 hinausstehen, verkürzt werden kann, was den Platzbedarf der mobilen Vulkanisierpresse 20, insbesondere während des Aufbaus, deutlich reduziert. Dies verbessert mithin die mobilen Eigenschaften der Vulkanisierpresse und macht sie vielfältiger einsetzbar.

Zudem zeigt die Figur 4c die Vergrößerung A der Figur 4a, das eine Justierschraubverbindung 36 vorgesehen ist, die eine Feineinstellung, u.a. und insbesondere,eines Abstandes zwischen der Druckplatte 24 und dem Druckkissen 25 erlaubt.

Schließlich zeigt die Figur 5a eine Steckwelle 37 mit Flügelblech 37a, das senkrecht zu einer Achse der Welle 37b verbunden ist; beispielsweise über eine in der Figur 5a gezeigte Schraubverbindung. Das Flügelblech 37a weist einen kürzeren und einen längeren Abschnitt ausgehend von dem Verbindungsbereich zwischen Flügelblech 37a und Welle 37b auf. Der kürzere Bereich ist dazu vorgesehen, diesen in Eingriff mit einer Flügelaufnahme 38, die Pfeilförmig bzw. dreieckig spitz zuläuft und in der Oberplatte 22b des Unterkastens 22 als Ausnehmung seitlich zu der ersten Bolzenaufnahme 32a angeordnet ist, zu bringen. Dies erlaubt es, dass, wenn der Zugbolzen 11 mit seiner Durchgangsbohrung 13a (Figur 6) zwischen den beiden ersten Halteelementen 33a angeordnet wird, die Welle 37b der Steckwelle 37 durch die Öffnungen 33ab und der Durchgangsbohrung 13a gesteckt werden kann, so dass der Zugbolzen 11 verschwenkbar an dem Unterkasten 22 gehalten wird.

Eine Sicherung der Steckwelle 37 gegen ein axiales Herausrutschen der Welle 37b aus der Öffnung 33ab und/oder der Durchgangsbohrung 13a kann dadurch verhindert werden, dass an dem längeren Abschnitt des Flügelbleches 37a gezogen wird, so dass der kürzere Abschnitt des Flügelbleches 37b in Eingriff mit der Flügelaufnahme 38 rotiert werden kann. Die Rotation kann so weit getrieben werden, bis ein ausreichender Reibkontakt zwischen der Flügelaufnahme 38 und einem Teil des Flügelbleches 37a eingestellt wurde, der ein selbsttätiges Lösen der Reibverbindung verhindert. Aufgrund des so hergestellten Eingriffes zwischen dem Flügelblech 37a und der Flügelaufnahme 38 in der Oberplatte 22b wird ein Herausfallen der Steckwelle 37 zuverlässig verhindert. Figur 1a und die Vergrößerung in Fig. 2c zeigen diesen gesicherten Zustand. Wird das Flügelblech 37a zudem optional unterschiedlich farbig zu der Oberplatte 22b gestaltet, so kann eine optisch schnell erfassbare Sicherungsanzeige realisiert werden.

Die wenig aufwendige Montage des Sicherungsmittels 10 bzw. des Zugbolzens 11 mittels der Steckwelle 37, die ohne weitere Werkzeuge oder andere Hilfsmittel durchgeführt werden kann, ermöglicht vorteilhaft, dass das Sicherungsmittel 10 bzw. der Zugbolzen 11 jederzeit ohne größeren Arbeitsaufwand gänzlich von dem Kasten 21 entfernt werden kann, insbesondere wenn dies bspw. beim Aufbau oder Abbau der mobilen Vulkanisierpresse 20 aus Platzgründen notwendig sein sollte.

Im Hinblick auf die Bauhöhe ist zudem als Vorteil der mobilen Vulkanisierpresse anzugeben, dass die Sicherungsmittel 10 aufgrund der Anordnung und Gestaltung der ersten und zweiten Zugbolzenaufnahmen 32a,b, z.B. sind diese in den nicht bedeckten Abschnitten 21a, 22a der Kästen 21, 22 eingelassen, nicht über die Oberkanten bzw. Unterkanten der Kästen 21, 22 hinausragen, was eine weitere Reduktion der Baugröße mit sich bringt und damit die Mobilität der Vulkanisierpresse noch weiter sichert.

Figur 6a zeigt ein Sicherungsmittel 10 mit einer Mutter 1 und einem Zugbolzen 11. Ein Ende bzw. Endabschnitt des Zugbolzens 11 ist ein Sackloch 3 der Mutter 1 eingeschraubt. Dazu weist das Sackloch 3 ein Innengewinde 3a und der Zugbolzen 11 an dem entsprechenden Endabschnitt ein Außengewinde 12 auf. Der Zugbolzen ist bevorzugt aus hochfestem Stahl oder hochfestem Aluminium gefertigt.

Ein Fixierelement 7 hält einen Längsabschnitt des Zugbolzens 11 unverlierbar mit der Mutter 1 verbunden. Dieser Längsabschnitt schließt sich bevorzugt unmittelbar an das Außenwinde 12 an. Das Fixierelement 7 ist in der Nut 4 und einer in Figur 6c sichtbaren Zugangsbohrung 5 angeordnet. Das in Figur 6c gezeigte Fixierelement 7 hat einen rechteckigen Querschnitt und kann teilweise aus der Nut 4 heraus- und in das Sackloch 3 hineinstehen oder den gleichen Querschnitt wie die Nut 4 aufweisen. Die Zugangsbohrung 5 und die Nut 4 können bevorzugt die gleiche Flächengröße des Querschnitts aufweisen. Es sei angemerkt, dass das Fixierelement 7 auch andere Querschnittsformen, wie z.B. eine runde oder eine ovale Form, aufweisen kann. Das Fixierelement 7, das in der Nut 4 verläuft, bildet eine Schlinge, die sich um einen Längsabschnitt des Zugbolzens 11 legen kann. Diese Schlinge hält die Mutter 1 sicher und unverlierbar mit dem Zugbolzen 11 verbunden.

Figur 6a zeigt zudem eine bevorzugte äußere Formgebung der Mutter 1, die bzw. deren Körper im Hinblick auf ein möglichst geringes Gewicht und einen formbedingtes Ausgleichen von Biege- und Torsionsbewegungen der mobilen Vulkanisierpresse optimiert wurde. Bevorzugt ist die Oberfläche 2a, wie in der Figur 6a dargestellt, kreisbogenförmig ausgeführt, um einen optimalen Kontakt mit der zugeordneten Oberfläche 34b des Tellerelementes 34 gemäß der Figur 5b bilden zu können. Diese Formgebung der Oberfläche 2a und der Fläche des Tellerelementes 34 erlaubt den Ausgleich von ggf. auftretenden Verformungen der mobilen Vulkanisierpresse 20 im Betrieb, die insbesondere als elastische Torsions- oder Durchbiegungsverformungen auftreten können. Weiterhin ist die Form der Mutter 1, wie auch die Figur 6b gut ersichtlich darstellt, möglichst materialsparend geformt, insbesondere die Mantelfläche ist stark verjüngt, und ein oberer Abschnitt (gegenüber der Oberfläche 2a) ist sternförmig ausgeführt, was einerseits gewichtssparend wirkt und andererseits eine gute Handhabung, insbesondere beim Verschrauben, der Mutter 1 erlaubt.

Weiter zeigt der Schnitt A-A gemäß Figur 6c Details der Mutter 1 bezüglich der Zugangsbohrung 5, der Anordnung des Fixierelementes 7 innerhalb der Nut 4 und der Zugangsbohrung 5 und bezüglich eines Befestigungsmittels 8, das mit dem Fixierelement 7 verbunden sein kann. Das Befestigungsmittel 8 hat ein Außengewinde, das mit einem Innengewinde der Durchgangsbohrung 5 in Kontakt steht und ein Verstellen der Relativposition des Befestigungsmittels 8 innerhalb der Durchgangsbohrung 5 erlaubt. Besonders bevorzugt wird das Fixierelement 7 bei einer Erstmontage in die Zugangsbohrung 5 eingeschoben. Danach kann das Befestigungsmittel 8, beispielsweise eine Schraube, in die Zugangsbohrung 5 eingeschraubt werden. Durch das Einschrauben des Befestigungsmittels 8 wird das Fixierelement 7 in seine Endposition geschoben, in der das Fixierelement 7 eine Schlinge um den Zugbolzen 11 bildet und den Zugbolzen 11 so unverlierbar mit der Mutter 1 sichern kann. Wenn verhindert werden soll, dass die Position des Befestigungsmittels 8 nachträglich nicht mehr verändert werden kann, so kann die Position des Befestigungsmittels 8 in der Zugangsbohrung 5 abschließend mit einem Klebstoff fixiert werden.

Alternativ zu dem vorbeschriebenen Beispiel kann das Befestigungsmittel 8 beispielsweise auch eine Hülse mit Außengewinde sein, die eine Aufnahme für das Befestigen eines Endes des Fixierelementes 7 aufweist. Das Fixierelement 7 kann mit dem Befestigungsmittel 8 beispielsweise mittels einer Klebeverbindung oder einer Klemmverbindung fest verbunden sein.

Der Schnitt A-A der Figur 6c zeigt die Anordnung des Befestigungsmittels 8 und des Fixierelementes 7 in der Durchgangsbohrung 5 bzw. der Nut 4, nachdem das Befestigungsmittel 8 in seine vorbestimmte Position eingedreht worden ist. Das Fixierelement 7 verläuft bis zu seinem entgegengesetzten Ende um die Nut 4 herum, so dass eine Schlinge geformt wird. Die Schlinge umgreift den Durchmesser des Sackloches 3. Das andere Ende des Fixierelementes 7 (also das, das nicht an dem Befestigungsmittel 8 angeordnet ist) kann innerhalb der Nut 4 mittels beispielsweise einer kraftschlüssigen oder einer formschlüssigen Verbindung fixiert sein. Beispielsweise kann die Nut 4 eine Verjüngung aufweisen, in der das Ende des Fixierelementes 7 eingeklemmt werden kann. Ferner kann die Nut 4 einen Dorn (nicht gezeigt) aufweisen, der das Fixierelement 7 an ihrem Ende aufspießt und so festhält. Eine stoffschlüssige Verbindung kann beispielsweise mittels einer Klebeverbindung realisiert sein.

Gemäß dem alternativen Beispiel, bei der das Befestigungsmittel 8 und ein Ende des Fixierelementes 7 fest miteinander verbunden sind, kann das Befestigungsmittel 8 nach außen in Richtung einer Öffnung der Zugangsbohrung 5 gedreht werden. Da das entgegengesetzte Ende des Fixierelementes 7 in der Nut 4 fixiert sein kann, kann das Fixierelement 7 gedehnt und der Durchmesser der Schlinge des Fixierelementes 7 verringert werden. Dieses Einschnüren der Schlinge kann bei einem in das Sackloch 3 eingedrehten Zugbolzen 11 dazu genutzt werden, dass das Fixierelement 7 sich noch fester um den Zugbolzen 11 herum anordnet und damit die Mutter 1 noch sicherer festhält . Ein tieferes Eindrehen des Befestigungsmittels 8 in die Zugangsbohrung 5 kann die Sicherung des Zugbolzens 11 wieder lösen, indem die Schlinge geweitet wird. Zudem kann das Fixierelement 7 ein Eindringen von Schmutz- und Staubpartikeln verhindern.

Darüber hinaus zeigt die Figur 6a das dem Außengewinde 12 des Zugbolzens 11 entgegengesetzte axiale Ende bzw. dessen Endabschnitt 13. Dieser hier beispielhaft gezeigte Endabschnitt weist einen bauchigen Abschnitt 13b auf, in den eine Durchgangsbohrung 13a eingelassen ist. Die Längsachse der Durchgangsbohrung 13a ist bevorzugt senkrecht zur Längsachse des Zugbolzens 11 angeordnet. Die Außenflächen 13d des bauchigen Abschnittes 13b sind plan, so dass diese Außenflächen 13d in Gleitkontakt mit den Halteelementen der Zugbolzenaufnahme gebracht werden können bzw. stehen können, wenn dies aus Platzgründen erforderlich sein sollte.

Ferner schließt sich an den bauchigen Abschnitt 13b ein verjüngter Abschnitt 13c des Zugbolzens 11 an, der an seinem axialen Ende eine Aufnahmebohrung 13e aufweist, in der ein Rastmittel 14 angeordnet ist, insbesondere hineingeschraubt ist. Das Rastmittel 14 ist bevorzugt eine Federschraube oder ein anderes Bauelement, das einen elastisch verschiebbaren oder elastisch positionsveränderbaren Rastabschnitt 14a aufweist. Der Rastabschnitt 14a bzw. das Rastmittel 14 kann mittels einer vorbestimmten Kraft, z.B. einer die, die Federkraft oder dgl. des Rastmittels 14 überschreitet, derart in Richtung des Zugbolzens 11 eingedrückt werden, dass das Rastmittel 14 weniger oder gar nicht mehr über das axiale Ende des Zugbolzens 11 hinausragt. In einem unbelasteten Grundzustand hingegen ragt das Rastmittel 14 bzw. dessen Rastabschnitt 14a über das Ende des Zugbolzens 11, wie dies die Figuren 6a und 6d zeigen, hinaus.

Ferner kann das Rastmittel 14 auch eine Kontermutter 14b umfassen, die ein Einstellen der axialen Relativposition des Rastmittels 14 bzw. dessen Rastabschnittes 14a ermöglicht. Mit anderen Worten erlaubt die optionale Kontermutter 14b, dass die Länge, mit der der Rastabschnitt 14a bzw. das Rastmittel 14 über das Ende des Zugbolzens 11 hinausragt, jederzeit justiert bzw. eingestellt werden kann.

Wie oben bereits beschrieben wurde, dient die Durchgangsbohrung 13a des Zugbolzens 11 dazu, von der Steckwelle 37 durchgriffen zu werden, um den Zugbolzen 11 schwenkbar an einem der Kästen 21, 22 (gezeigt ist der Fall: Unterkasten 21) anzuordnen. Ferner ist das Rastmittel 14 derart an dem Ende des Zugbolzens 11 angeordnet, dass zumindest der Rastabschnitt 14a mit den Raststellen 35a der Rastleiste 35 einrastet, wenn der Zugbolzen 11 von der ersten Zugbolzenaufnahme 32a schwenkbar gehalten wird.

Zusammenfassend ermöglicht die Erfindung somit, dass eine mobile Vulkanisierpresse angeboten werden kann, die einfacher handhabbar ist und kompakter ist, so dass sie besonders für mobile Anwendungen, bei denen häufig ein Auf-, Um- oder Abbau stattfindet und zudem häufig wenig Bauraum vorhanden ist, geeignet ist. Spezifische technische Vorteile können insbesondere sein, dass der/die Zugbolzen 11 schwenk- und insbesondere rastbar sein können und sich zudem mit wenig aufwendig demontieren lassen können, u.a. aufgrund der Zugbolzenachse, die eine Steckwelle 37 sein kann und vollständig sicher zu arretieren sein kann. Ferner können die Zugbolzen 11 aus hochfestem Aluminium gefertigt sein und ein geringes Gewicht aufweisen. Deren Gewinde 12 können besonders gut vor Beschädigung geschützt und gegen Verschmutzung abgedichtet sein, da die Mutter 1 die vorbeschriebene Fixier- und Abdichtmittel 7 aufweisen kann.

Weitere technische Vorteile sind, dass die oberen Enden der Zugbolzen bzw. der Muttern 1 der Sicherungselemente 10 aufgrund der eingelassenen Zugbolzenmutteraufnahme 32b bündig mit der Oberseite der Vulkanisierpresse 20 abschließen können. Die so erzielte niedrige Bauform schafft vielseitige Aufstellmöglichkeiten, u.a. auch in Umgebungen mit kleinem Installationsraum. Auch lassen sich zwei Vulkanisierpressen 20 problemlos nebeneinander positionieren, da keine seitlichen Bauteile überstehen, die zunächst abgebaut/entfernt werden müssten. Die bevorzugten klappbaren Seitengriffe 30 tragen zu der geringen Baugröße in lateraler Richtung bei und erlauben gleichzeitig ein komfortables Handling. Die bevorzugten Trageösen 31 garantieren einen sicheren Kranbetrieb und sind mit wenig Aufwand entfernbar.

Die Vulkanisierpresse 20 kann ferner einen vollwertigen, kompakten Schaltschrank 40 mit passendem Gehäuse aufweisen, der vollständig in die Vulkanisierpresse 20 bzw. einen der Kästen 21, 22 integriert sein kann. Der Schaltschrank 40 kann eine umfassende Ausstattung aufweisen, u.a. einen oder mehrere Digital-Temperaturregler, eine oder mehrere Anzeigen der Soll-/Ist-Temperatur der Heizplatten 23, 24, eine oder mehrere Anzeige des Soll-/Ist-Werts der Vulkanisierzeit, eine oder mehrere Temperaturdifferenzüberwachung(en), einen oder mehrere Reset-Knöpfe, die mit Leuchte oder nicht ausgestattet sein können, und dgl. Zudem kann, auch in einem manuellen Betrieb der Vulkanisierpresse 20, höchstmögliche Sicherheit gewährleistet werden, u.a. kann ein tastender Schalter für einen automatischen Betrieb vorgesehen sein und/oder eine Thermometerbohrung in den Heizplatten 23, 24 für einen Digitalthermometereinsatz während des manuellen Betriebes.

## Patentansprüche

1. Sicherungsmittel (10) für eine mobile Vulkanisierpresse (20) mit
einem Zugbolzen (11), der an einem seiner beiden axialen Enden ein Außengewinde (12) aufweist und an dessen gegenüberliegendem axialen Ende ein Rastmittel (14) angeordnet ist, wobei der Zugbolzen (11) eine Durchgangsbohrung (13a) aufweist, die zwischen den beiden axialen Enden des Zugbolzens (11) angeordnet ist und deren Achse senkrecht zu der des Zugbolzens (11) angeordnet ist,
**gekennzeichnet dadurch, dass**
eine Länge, mit der das Rastmittel (14) über das axiale Ende des Zugbolzens (11) hinausragt, elastisch veränderbar ist.

2. Mobile Vulkanisierpresse (20) mit
einem Unterkasten (22) und einem Oberkasten (21), die übereinander und mit Vulkanisiergut (V) dazwischen anordenbar sind, wobei der Unterkasten (22) zumindest eine erste Bolzenaufnahme (32a) aufweist, an
der ein Zugbolzen (11) verschwenkbar anordenbar ist,
**gekennzeichnet dadurch, dass**
zumindest eine Raststelle (35a) an dem Unterkasten (22) derart angeordnet ist, dass ein Rastmittel (14) eines Zugbolzens (11) in zumindest einer vorbestimmten Schwenkposition des Zugbolzens (11) in die zumindest eine Raststelle (35a) einrasten kann.

3. Mobile Vulkanisierpresse (20) gemäß Anspruch 2, **gekennzeichnet dadurch, dass** die zumindest eine erste Bolzenaufnahme (32a) zumindest zwei zueinander beabstandet angeordnete erste Halteelemente (33a) umfasst, die fluchtend angeordnete Öffnungen (33ab) aufweisen und zwischen denen die Durchgangsbohrung (13a) des Zugbolzens fluchtend mit den Öffnungen der Halteelemente anordenbar ist, um diesen mit einer Steckwelle (37) an dem Unter- bzw. dem Oberkasten (21, 22) verschwenkbar zu befestigen, und wobei
- die zumindest eine Raststelle (35a) zwischen den ersten Halteelementen (33a) angeordnet ist.

4. Mobile Vulkanisierpresse (20) gemäß zumindest einem der vorangegangenen Ansprüche 2 und 3, **gekennzeichnet dadurch, dass** mehrere Raststellen (35a) vorgesehen sind, die mehrere Schwenkpositionen des Zugbolzens (11) vorgeben, wobei die Raststellen (35a) als Einkerbungen an einer Rasteleiste (35) ausgebildet sind.

5. Mobile Vulkanisierpresse (20) gemäß zumindest einem der vorangegangenen Ansprüche 2-4, **gekennzeichnet dadurch, dass** der Ober- und der Unterkasten (21, 22) jeweils eine Heizplatte (23, 24) aufweist, wobei der Ober- und der Unterkasten (21, 22) eine rechteckige Grundfläche und die Heizplatte (23, 24) jeweils eine parallelogrammförmige Grundfläche aufweist, wobei
- die Längskanten der Heizplatte (23, 24) und des Ober- bzw. Unterkastens (21, 22) bündig übereinander angeordnet sind und die kürzeren Seitenkanten des Ober- bzw. Unterkastens (21, 22) über die Seitenkanten der Heizplatte (23, 24) hinausstehen, und wobei
- die zumindest eine erste Bolzenaufnahme (32a) des Unter- bzw. Oberkastens (21, 22) in dem Abschnitt des Unter- bzw. Oberkastens (21, 22) angeordnet ist, der über die Seitenkante der Heizplatte (23, 24) hinaussteht.

6. Mobile Vulkanisierpresse (20) gemäß zumindest einem der vorangegangenen Ansprüche 2-5, **gekennzeichnet dadurch, dass** die Halteelemente (33) als Metallbleche ausgebildet sind, die am Unterkasten (22) angeordnet sind und am Oberkasten (21) zumindest eine zweite Bolzenaufnahme (32b) angeordnet ist, die ein Tellerelement (34) mit U-förmiger Ausnehmung (34a) umfasst.

7. Mobile Vulkanisierpresse (20) gemäß zumindest einem der vorangegangenen Ansprüche 2-6, **gekennzeichnet dadurch, dass** ein Tellerelement (34) mit U-förmiger Ausnehmung (34a) derart an dem Oberkasten (21) angeordnet ist, dass bei einem Verschwenken des mit dem Unterkasten (22) verbundenen Zugbolzens (11) dieser in Eingriff mit der U-förmigen Ausnehmung (34a) bringbar ist, und wobei
- das Tellerelement (34) eine kugelförmig eingesenkte Oberfläche (34b) aufweist.

8. Mobile Vulkanisierpresse (20) gemäß zumindest einem der vorangegangenen Ansprüche 2-7, **gekennzeichnet dadurch, dass** der Zugbolzen (11) in der ersten Bolzenaufnahme (33a) mittels einer Steckwelle (37) sicherbar ist, die an einem Axialende ein Flügelblech (37a) hat und die erste Bolzenaufnahme (33a) eine Flügelaufnahme (38) aufweist, die dazu geeignet ist, einen Abschnitt des Flügelbleches (37a) der Steckwelle (37) nach dem Einstecken der Steckwelle (37) in die Öffnungen der ersten Halteelemente (33a) der ersten Bolzenaufnahme (32a) mittels Rotation in Eingriff mit der Flügelaufnahme (38) zu bringen.

9. Mobile Vulkanisierpresse (20) gemäß zumindest einem der vorangegangenen Ansprüche 2-8, **gekennzeichnet dadurch, dass** die Flügelaufnahme (38) eine von dem Flügelblech (37a) abweichende Farbe aufweist.

10. Mobile Vulkanisierpresse (20) gemäß zumindest einem der vorangegangenen Ansprüche 2-9, **gekennzeichnet durch**
- zumindest zwei Sicherungsmitteln (10) gemäß Patentanspruch 1 zum Verbinden des Oberkastens (21) und des Unterkastens (22) im übereinander angeordneten Zustand.

11. Mobile Vulkanisierpresse (20) gemäß Patentanspruch 10, **gekennzeichnet dadurch, dass** die Länge der Sicherungsmittel (10) kleiner oder gleich dem Abstand zwischen einer Oberseite des Oberkastens (21) und einer Unterseite des Unterkastens (22) ist.

## Claims

1. A securing means (10) for a mobile vulcanizing press (20), comprising
a tension bolt (11), which has an external thread (12) at one of its two axial ends and at the opposite axial end of which a latching means (14) is arranged, wherein said tension bolt (11) has a through-bore (13a), which is arranged between the two axial ends of said tension bolt (11) and the axis of which is arranged perpendicularly to that of said tension bolt (11), and
**characterized in that**
a length by which said latching means (14) projects beyond the axial end of said tension bolt (11) is elastically variable.

2. A mobile vulcanizing press (20), comprising
a lower box (22) and an upper box (21) which are arrangeable one on top of the other with material (V) to be vulcanized in between, wherein said lower box (22) has at least one first bolt receptacle (32a) at which a tension bolt (11) can be pivotably arranged, and
**characterized in that**
at least one latching point (35a) is arranged on said lower box (22) such that a latching means (14) of a tension bolt (11) can latch in said at least one latching point (35a) in at least one predetermined pivoted position of said tension bolt (11).

3. The mobile vulcanizing press (20) according to claim 2, **characterized in that** said at least one first bolt receptacle (32a) comprises at least two first holding elements (33a) arranged in a manner spaced apart from one another, which have openings (33ab) arranged in an aligned manner and between which said through-bore (13a) of said tension bolt can be arranged in a manner aligned with the openings of the holding elements in order to pivotably fasten said tension bolt to the lower or upper box (21, 22) by way of a stub shaft (37), and wherein
said at least one latching point (35a) is arranged between said first holding elements (33a).

4. The mobile vulcanizing press (20) according to at least one of the preceding claims 2 and 3, **characterized in that** a plurality of latching points (35a) are provided, which predefine several pivoted positions of said tension bolt (11), wherein said latching points (35a) are formed as notches in a latching strip (35).

5. The mobile vulcanizing press (20) according to least one of the preceding claims 2-4, **characterized in that** said upper and lower boxes (21, 22) each have a heating plate (23, 24), wherein said upper and lower boxes (21, 22) have a rectangular base area and said heating plate (23, 24) has a parallelogram-shaped base area in each case, wherein
- the longitudinal edges of said heating plate (23, 24) and of said upper and lower boxes (21, 22) are arranged one above the other in a flush manner and the shorter lateral edges of said upper and lower boxes (21, 22) protrude beyond the lateral edges of said heating plate (23, 24), and wherein
- said at least one first bolt receptacle (32a) of said upper or lower box (21, 22) is arranged in a portion of said lower or upper box (21, 22) that protrudes beyond the lateral edge of said heating plate (23, 24).

6. The mobile vulcanizing press (20) according to at least one of the preceding claims 2-5, **characterized in that** said holding elements (33) are formed as metal plates arranged on said lower box (22), and at least one second bolt receptacle (32b) comprising a dish element (34) with a U-shaped recess (34a) is arranged on said upper box (21).

7. The mobile vulcanizing press (20) according to at least one of the preceding claims 2-6, **characterized in that** a dish element (34) with a U-shaped recess (34a) is arranged on said upper box (21) such that, when said tension bolt (11) connected to said lower box (22) is pivoted, said tension bolt (11) can be brought into engagement with said U-shaped recess (34a), and wherein
- said dish element (34) has a spherically recessed surface (34b).

8. The mobile vulcanizing press (20) according to at least one of the preceding claims 2-7, **characterized in that** said tension bolt (11) is securable in said first bolt receptacle (33a) by means of a stub shaft (37) having a wing plate (37a) at one axial end, and said first bolt receptacle (33a) has a wing receptacle (38), configured to bring a portion of said wing plate (37a) of said stub shaft (37) into engagement with said wing receptacle (38) by means of rotation after said stub shaft (37) has been plugged into the openings in said first holding elements (33a) of said first bolt receptacle (32a).

9. The mobile vulcanizing press (20) according to at least one of the preceding claims 2-8, **characterized in that** said wing receptacle (38) has a colour different from that of said wing plate (37a).

10. The mobile vulcanizing press (20) according to at least one of the preceding claims 2-9, **characterized by**
- at least two securing means (10) according to claim 1 for connecting said upper box (21) and said lower box (22) in a state arranged one on top of the other.

11. The mobile vulcanizing press (20) according to claim 10, **characterized in that** the length of said securing means (10) is less than or equal to the spacing between a top side of said upper box (21) and a bottom side of said lower box (22).

## Revendications

1. Dispositif de blocage (10) pour une presse à vulcaniser mobile (20), comportant
un boulon de traction (11) qui présente un filetage (12) à l'une de ses deux extrémités axiales, et à l'extrémité axiale opposée duquel est disposé un moyen d'enclenchement (14), le boulon de traction (11) présentant un perçage traversant (13a) qui est disposé entre les deux extrémités axiales du boulon de traction (11) et dont l'axe est disposé perpendiculairement à celui du boulon de traction (11),
**caractérisé en ce que**
une longueur par laquelle le moyen d'enclenchement (14) dépasse au-delà de l'extrémité axiale du boulon de traction (11) est élastiquement variable.

2. Presse de vulcanisation mobile (20) comportant
un caisson inférieur (22) et un caisson supérieur (21), qui peuvent être disposés l'un au-dessus de l'autre avec un matériau de vulcanisation (V) interposé, le caisson inférieur (22) comportant au moins un premier logement à boulon (32a) sur lequel un boulon de traction (11) peut être disposé de façon mobile en pivotement,
**caractérisée en ce que**
au moins un emplacement d'enclenchement (35a) est disposé sur le caisson inférieur (22) de telle sorte qu'un moyen d'enclenchement (14) d'un boulon de traction (11) peut s'enclencher dans ledit au moins un emplacement d'enclenchement (35a), dans au moins une position de pivotement prédéterminée du boulon de traction (11).

3. Presse de vulcanisation mobile (20) selon la revendication 2,
**caractérisée en ce que**
ledit au moins un premier logement à boulon (32a) comprend au moins deux premiers éléments de retenue (33a) disposés à distance l'un de l'autre qui présentent des ouvertures (33ab) disposées en alignement et entre lesquels le perçage traversant (13a) du boulon de traction peut être disposé en alignement avec les ouvertures des éléments de retenue, afin de le fixer au caisson inférieur ou supérieur (21, 22) de façon mobile en pivotement par un arbre d'enfichage (37), et
ledit au moins un emplacement d'enclenchement (35a) est disposé entre les premiers éléments de retenue (33a).

4. Presse de vulcanisation mobile (20) selon l'une au moins des revendications précédentes 2 et 3,
**caractérisée en ce que**
il est prévu plusieurs emplacements d'enclenchement (35a) qui définissent plusieurs positions de pivotement du boulon de traction (11), les emplacements d'enclenchement (35a) étant réalisés sous forme d'encoches dans une baguette à crans (35).

5. Presse de vulcanisation mobile (20) selon l'une au moins des revendications précédentes 2 à 4,
**caractérisée en ce que**
les caissons supérieur et inférieur (21, 22) comprennent chacun une plaque chauffante (23, 24), les caissons supérieur et inférieur (21, 22) présentant une surface de base rectangulaire et la plaque chauffante (23, 24) respective présentant une surface de base en forme de parallélogramme, et
- les arêtes longitudinales de la plaque chauffante (23, 24) du caisson supérieur ou inférieur (21, 22) sont disposées en affleurement l'une au-dessus de l'autre, et les arêtes latérales plus courtes du caisson supérieur ou inférieur (21, 22) dépassent au-delà des arêtes latérales de la plaque chauffante (23, 24), et
- ledit au moins un premier logement à boulon (32a) du caisson inférieur ou supérieur (21, 22) est disposé dans la portion du caisson inférieur ou supérieur (21, 22) qui dépasse au-delà de l'arête latérale de la plaque chauffante (23, 24).

6. Presse de vulcanisation mobile (20) selon l'une au moins des revendications précédentes 2 à 5,
**caractérisée en ce que**
les éléments de retenue (33) sont réalisés sous forme de tôles métalliques disposées sur le caisson inférieur (22), et au moins un second logement à boulon (32b) est disposé sur le caisson supérieur (21), qui comprend un élément formant assiette (34) ayant un évidement (34a) en forme de U.

7. Presse de vulcanisation mobile (20) selon l'une au moins des revendications précédentes 2 à 6,
**caractérisée en ce que**
un élément formant assiette (34) ayant un évidement (34a) en forme de U est disposé sur le caisson supérieur (21) de telle sorte que lors d'un pivotement du boulon de traction (11) relié au caisson inférieur (22), ledit boulon peut être amené en engagement avec l'évidement (34a) en forme de U, et
- l'élément formant assiette (34) présente une surface (34b) enfoncée en forme sphérique.

8. Presse de vulcanisation mobile (20) selon l'une au moins des revendications précédentes 2 à 7,
**caractérisée en ce que**
le boulon de traction (11) peut être bloqué dans le premier logement à boulon (33a) au moyen d'un arbre d'enfichage (37) qui comprend à une extrémité axiale une tôle à aile (37a), et le premier logement à boulon (33a) présente un logement à aile (38) qui est apte à amener une portion de la tôle à aile (37a) de l'arbre d'enfichage (37) par rotation en engagement avec le logement à aile (38), une fois que l'arbre d'enfichage (37) est enfiché dans les ouvertures des premiers éléments de retenue (33a) du premier logement à boulon (32a).

9. Presse de vulcanisation mobile (20) selon l'une au moins des revendications précédentes 2 à 8,
**caractérisée en ce que**
le logement à aile (38) présente une couleur qui diffère de celle de la tôle à aile (37a).

10. Presse de vulcanisation mobile (20) selon l'une au moins des revendications précédentes 2 à 9,
**caractérisée par**
- au moins deux moyens de blocage (10) selon la revendication 1 pour relier le caisson supérieur (21) et le caisson inférieur (22), dans l'état disposé l'un au-dessus de l'autre.

11. Presse de vulcanisation mobile (20) selon la revendication 10,
**caractérisée en ce que**
la longueur des moyens de blocage (10) est inférieure ou égale à la distance entre une face supérieure du caisson supérieur (21) et une face inférieure du caisson inférieur (22).
